# EUROPEAN PATENT APPLICATION

(11) **EP 2 798 975 A1**
(43) Date of publication of application: **05.11.2014**
(21) Application number: 14166569.5
(22) Date of filing: 30.04.2014
(51) Int. Cl.: A47B 3/00, F16F 15/067

(54) **Support for anti seismic protection**

(30) Priority: 30.04.2013 IT MI20130713
(71) Applicant: Goppion S.p.A., 20090 Trezzano sul Naviglio (MI) (IT)
(72) Inventor: Goppion, Alessandro, I-20144 Milano (IT)
(74) Representative: Checcacci, Giorgio

(57) **Abstract**

This seismic protection support comprises a lower supporting base that is intended to be rested or fixed on the ground, an upper table intended to carry an object to be protected against an earthquake, and a mechanical connection system between the supporting base and the table. The mechanical system comprises at least one pantographic arm, with a succession of inner links and outer links connected together by pin elements; the first link of the succession is hinged to the supporting base through a base pin element and the last link of the succession is hinged to the table through a table pin element. In such a way, the table is free to move with respect to the base between a predetermined initial position and a plurality of final positions. In the case in which there is an earthquake, while the supporting base is moved by the earthquake itself, the table tends to remain in its previous position.

## Description

The present invention refers to a support that is capable of protecting what is mounted on it against earthquakes, in particular undulatory earthquakes.

Among the different types of damage that can be caused by an earthquake there is also the damage to art pieces kept in museums, collections, art exhibitions and the like. Even in the case in which the structure of the building is earthquake resistant and therefore there is no risk of the art pieces being crushed by the falling building itself, the art pieces can become damaged because the supports or display cabinets they are on, fall, or they themselves could fall down.

In order to avoid this damage, so-called anti-seismic supports have been developed which are based on the use of sliding guides that are perpendicular to one another, so as to connect a fixed lower supporting base and an upper table that is free to move. Although these supports are undoubtedly an improvement, making it possible to ensure good seismic protection, they can be affected by the direction of the earthquake: the sliding is indeed easier (and therefore there is greater protection) when the earthquake is in the direction of one of the two guides, whereas in the case in which there is an earthquake in an intermediate direction between that of the two sliding guides the sliding can become more difficult (and therefore there is less protection).

The present invention thus concerns a support according to claim 1. Preferred characteristics are indicated in the dependent claims.

More in particular, the invention concerns a seismic protection support, comprising a lower supporting base that is intended to be rested or fixed on the ground, an upper table intended to carry an object to be protected against an earthquake, a mechanical connection system between the supporting base and the table, characterised in that the mechanical system comprises at least one pantographic arm, with a succession of inner links and outer links that are connected together by pin elements, in which each outer link comprises an upper rod and a lower rod that are parallel to one another, in which the first link of the succession is hinged to the supporting base through a base pin element and in which the last link of the succession is hinged to the table through a table pin element, so that the table is free to move with respect to the base between a predetermined initial position and a plurality of final positions.

A pantographic arm gives the table two degrees of freedom with respect to the supporting base; in particular, the table is free to move according to a plane that is horizontal with respect to the supporting base. In the case in which there is an earthquake, therefore, whereas the supporting base will be moved by the earthquake itself, the table will tend to remain in its previous position. The table is free to move in the horizontal plane in any direction in the same way, i.e. without any difference in relation to the thrust direction of the earthquake.

On the table it is possible to house a display cabinet or, directly, an art piece to be protected, or the support could be inside a display cabinet; in this last case, of course, the display cabinet must have dimensions that are suitable for allowing all possible movements of the table. The weight of what is positioned on the table is transferred from the table to the supporting base by means of the pantographic arm, which will thus undergo lots of bending stress; for this reason, it is important for the outer links to each comprise the pair of upper and lower rods, so as to best withstand the bending stress of the arm.

Preferably, the mechanical system comprises at least two pantographic arms. With the two arms, especially if mounted in opposite positions, there is substantially less bending stress on the arms themselves; it is thus possible to make all the components of the arms with smaller sections with respect to an embodiment with a single arm.

More preferably, the mechanical system comprises at least three pantographic arms. With three arms, especially if they are mounted at 120°, there is not only a better distribution of the bending stress, but it is also possible to better oppose possible tilting forces on the table which lead to twisting stress on the arms.

In a further preferred embodiment, the mechanical system comprises four pantographic arms. This solution does not have substantial improvements with respect to the bending or twisting stress (which was already suitably counteracted in the case in which there were three arms), although it does obviously improve the distribution thereof onto the four arms. On the other hand, it is a preferred solution for geometrical reasons, since display cabinets and the like are mainly square or rectangular-shaped.

Preferably, the pin elements of the pantographic arm, the base pin element and the table pin element are provided with combined rolling bearings, of the type that are suitable for sustaining axial loads. The pin elements can thus better ensure the total deformability of the pantographic arms, even when there are substantial loads in the axial direction (heavy objects placed on the table).

Preferably, every inner link comprises an upper rod and a lower rod, that are parallel to one another. This doubling up puts the arm in the best conditions for sustaining bending stress.

Preferably, the mechanical system comprises a single pair of intermediate flanges that are fixed to the base or to the table, the base pin elements or the table pin elements, respectively, of each pantographic arm being carried by the pair of intermediate flanges. The pair of flanges ensures that there is the direct distribution of the stress between the different pantographic arms and between these and the supporting base or the table (according to the configuration used). In general, it can be preferable for the pair of flanges to be fixed to the supporting base: indeed in this case, if a strong resistance to heeling were necessary, the anchoring between the pair of flanges and the ground could be strengthened as desired, also with anchoring elements that penetrate very deep inside the ground; on the other hand, towards the table, where strengthening is limited by the thickness of the table, the anchoring of the arms at their ends, away from one another, is already such as to suitably counteract undesired movements.

Preferably, the support comprises at least one elastic return member, to bias the table towards its initial position.

Indeed, whereas for the absorption of an earthquake it can be theoretically preferable for there to not be any resistance to the deformation of the arms and therefore to the movement of the table with respect to the supporting base, it is in any case useful for the support to be capable of autonomously returning to its initial position after having undergone a deformation due to an earthquake. Indeed, in such a way, it is prevented that after an earthquake it is necessary to manually reposition the table; this advantage, in addition to avoiding the need of manual intervention that is in any case onerous (i.e. a large museum with a very high number of this kind of support), allows the support to return rapidly in the condition of being able to absorb another shake. Ultimately, since often when there is an earthquake there are many successive shocks over time, this characteristic -which is apparently detrimental- actually improves the effectiveness of the support.

The aforementioned elastic return member can have many configurations. In one preferred embodiment, the elastic return member comprises torsion springs that are applied to at least some of the pin elements of the arm and/or of the base and/or of the table; in an alternative embodiment, the elastic return member comprises traction springs that are applied between the table and the supporting base. In both cases, these are simple widely available low-cost mechanical elements having high operation reliability, which make it possible to safely obtain the aforementioned advantages without having a substantial impact upon the cost of the support.

Preferably, the mechanical system comprises at least one damping member, to brake the movement of the table away from its initial position.

As mentioned above relating to the possible elastic return member, whereas for the absorption of an earthquake it can theoretically be preferable for there to be no resistance to the deformation of the arms and therefore to the movement of the table with respect to the supporting base, it is in any case useful for every movement of the table to be gradually braked, so as to avoid reaching end-stop positions; in such a case, indeed, the protection would become jeopardised by the end stop collision.

The aforementioned damping member can have many configurations. In a preferred embodiment, the damping member comprises linear dampers that are applied between the table and the supporting base. In both cases, these are simple widely available low-cost mechanical elements having high operation reliability, which make it possible to safely obtain the advantages indicated above without having a substantial impact upon the costs of the support.

In one preferred embodiment, the damping member is of the variable damping type, in which the braking action is linked not only to the speed of movement but also to the extent of the movement.

Further characteristics and advantages of a display cabinet according to the invention shall become clearer from the following description of a preferred embodiment thereof, given with reference to the attached schematic drawings. In such drawings:
- figs. 1a, 1b and 1c are respectively a perspective view, a side view and a view from above of a support according to one embodiment of the invention, in resting condition;
- figs. 2a, 2b and 2c are respectively a perspective view, a side view and a view from above of the support of figures 1a, 1b, 1c, in a temporary condition after a simple earthquake, which has caused the table to translate;
- figs. 3a, 3b and 3c are respectively a perspective view, a side view and a view from above of the support of figures 1a, 1b, 1c, in a temporary condition after a complex earthquake, which has caused the table to rotate and translate;

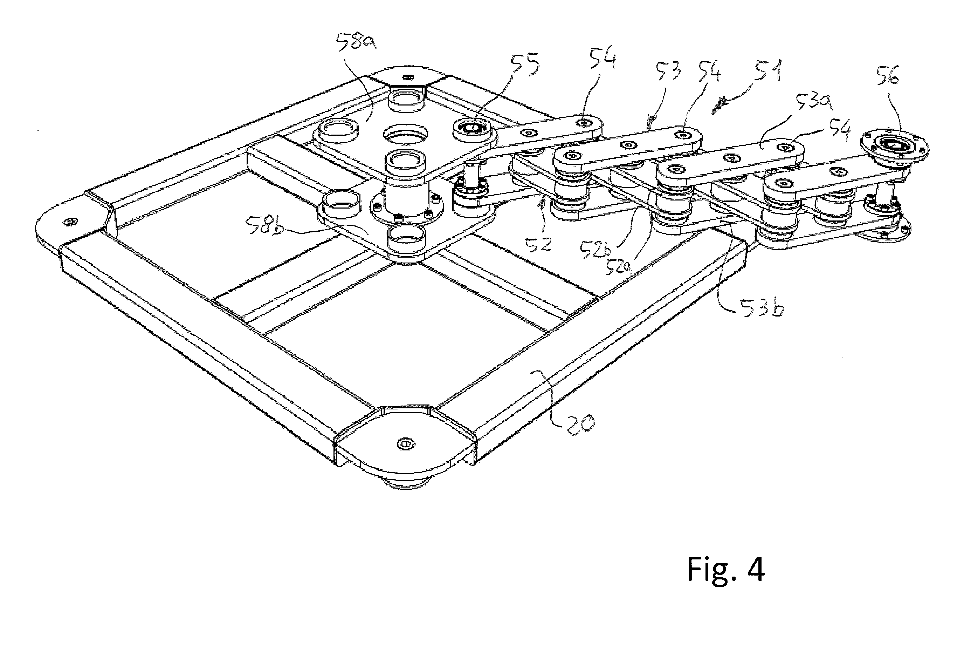

- fig. 4 is a perspective view of the support of figures 1a, 1b, 1c, with parts that have been partially removed, so as to show the supporting base and one of the pantographic arms;

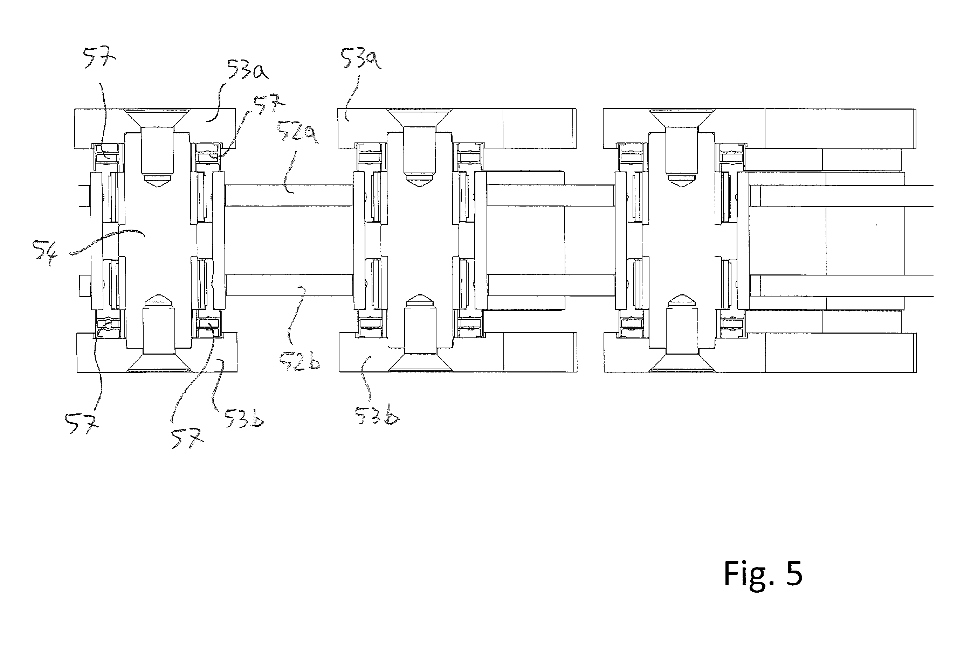

- fig. 5 is a section view of one of the pantographic arms, shown according to the line V-V of fig. 4;
- figs. 6, 7 and 8 are perspective views of a display cabinet that is mounted on the support of the previous figures, in the conditions corresponding to those of figs. 1, 2 and 3, respectively;
- figs. 9a and 9b are analogous views to figs. 1 a and 1c of a variant of the support of figs. 1-8, provided with elastic return members;
- fig. 10 is a perspective section view of a further variant of the support of figs. 1-8, provided with elastic return members;
- fig. 11 is an analogous view to fig. 1 a of a variant of the support provided with dampers.

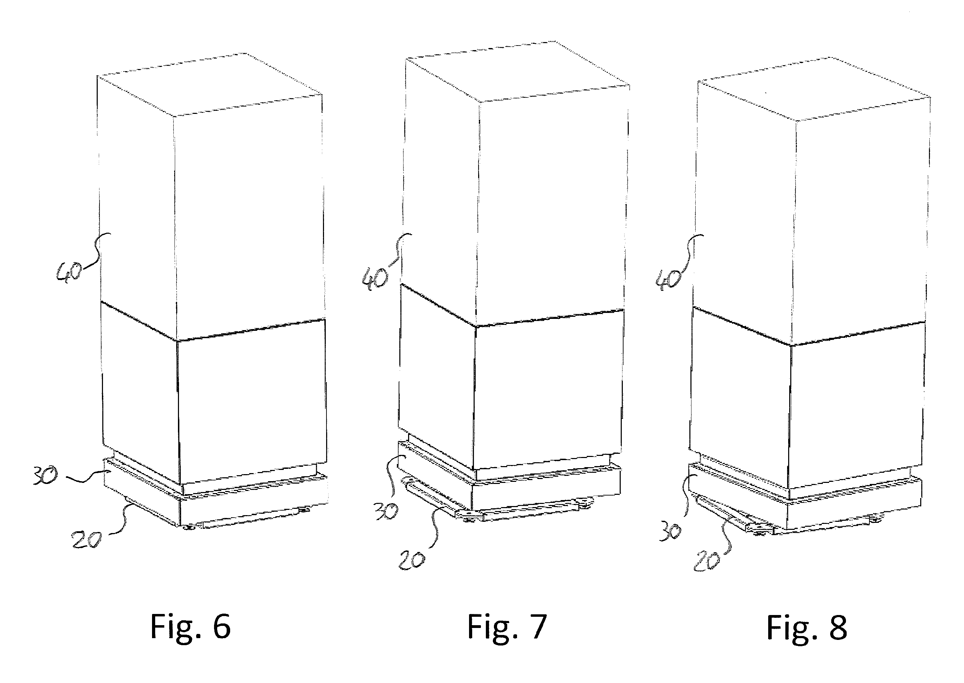

In the figures, reference numeral **10** indicates a seismic protection support according to the invention. The support 10 comprises a lower supporting base **20,** which is intended to be rested or fixed on the ground, and an upper table **30,** which is intended to carry an object to be protected against an earthquake, for example a display cabinet such as the display cabinet **40** shown in figures 6-8. In the present patent application, by ground we mean the ground, a floor or an equivalent structure, which can be subjected to seismic shocks (whether natural or artificial).

The support 10 also comprises a mechanical system **50** for connecting the supporting base 20 to the table 30.

The mechanical system 50 in turn comprises at least one pantographic arm, in particular in the support 10 illustrated, four pantographic arms **51,** which are the same as one another, each of which is formed by a succession of inner links **52** and outer links **53** that are connected together by pin elements **54.** Each inner link 52 comprises an upper rod **52a** and a lower rod **52b,** that are parallel to one another; each outer link 53 comprises an upper rod **53a** and a lower rod **53b** that are parallel to one another. The elements from 51 to 54 can be made with different materials. In particular, the rods 52a, 52b, 53a, 53b could be made in steel, in aluminium or in composite materials (carbon-fibre based materials or the like), according to the importance -in each single application- of factors such as weight, rigidity, cost.

The first link of the succession (which is preferably an outer link 53) is hinged to the supporting base 20 through a base pin element **55;** the last link of the succession (which is also preferably an outer link 53) is hinged to the table 30 through a table pin element **56.**

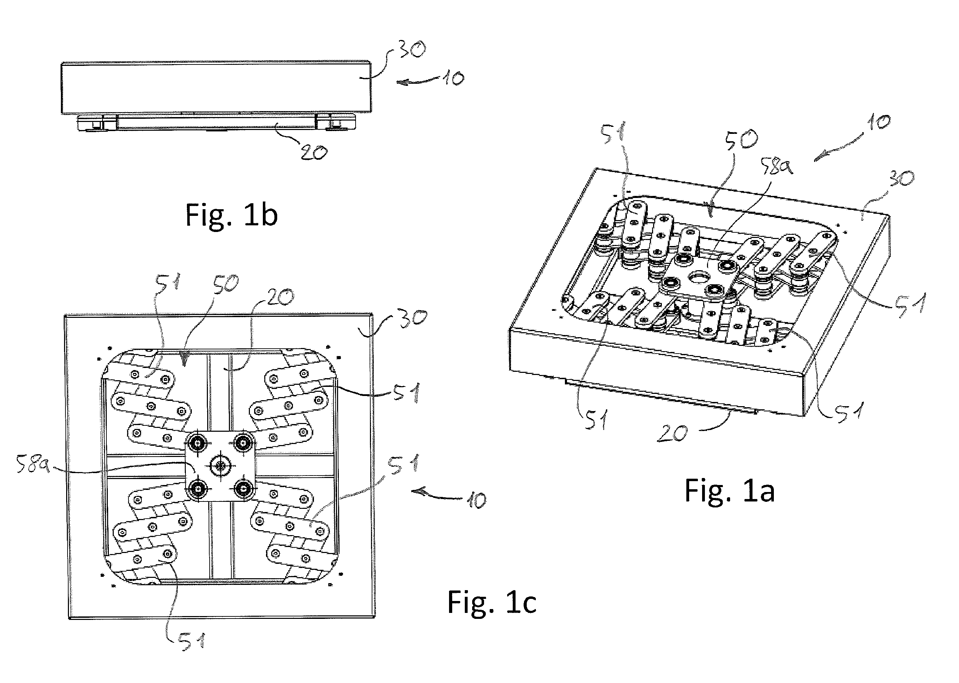

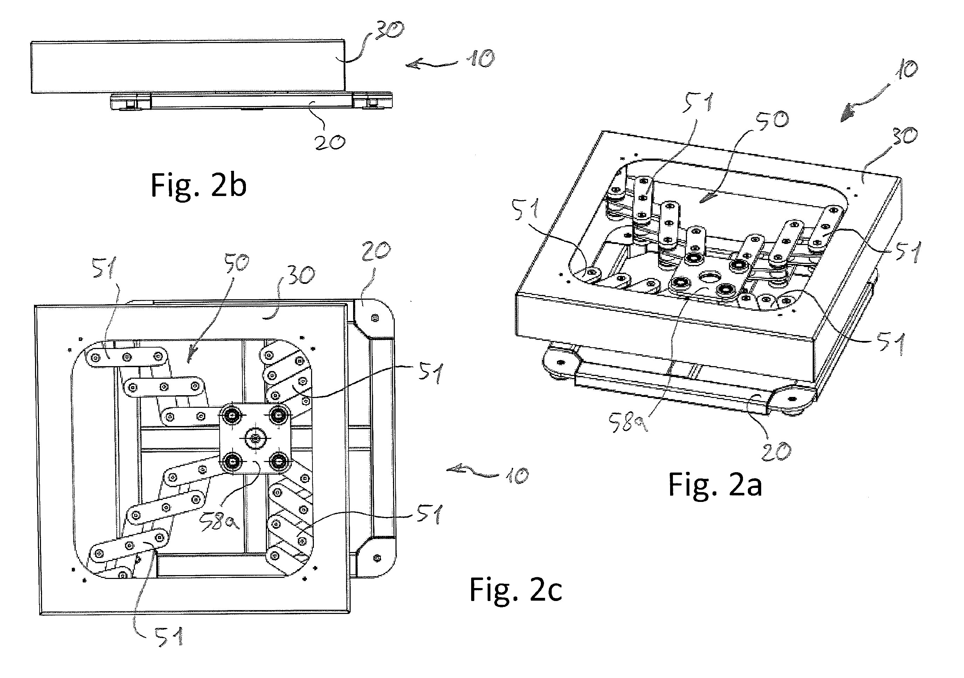

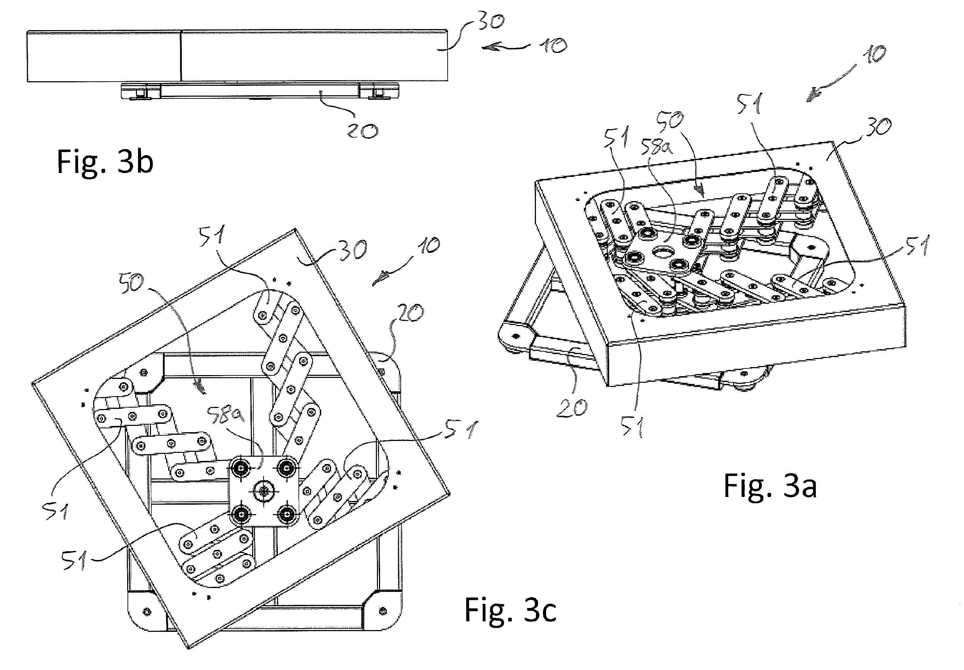

The table 30 is thus free to move with respect to the supporting base 20 between a predetermined initial position, shown in figures 1a, 1b, 1c and 6, and a plurality of final positions, to which clearly depend upon the earthquake the supporting base 20 is subject; figures 2a, 2b, 2c and 7 show a final position in which the table 30 is translated with respect to its initial position, whereas figures 3a, 3b, 3c and 8 show a final position in which the table 30 is rotated and translated with respect to its initial position.

The pin elements 54 of the pantographic arm, the base pin element 55 and the table pin element 56 are each provided with rolling bearings, all indicated with reference numeral **57** (even though they are not all necessarily the same as one another), of the so-called combined type, i.e. suitable for also sustaining axial loads.

The mechanical system 50 also comprises a single pair of intermediate flanges **58a, 58b** that are fixed to the supporting base 20. The base pin elements 55 of each pantographic arm 51 are carried by the pair of intermediate flanges 58a, 58b, which are inserted between them.

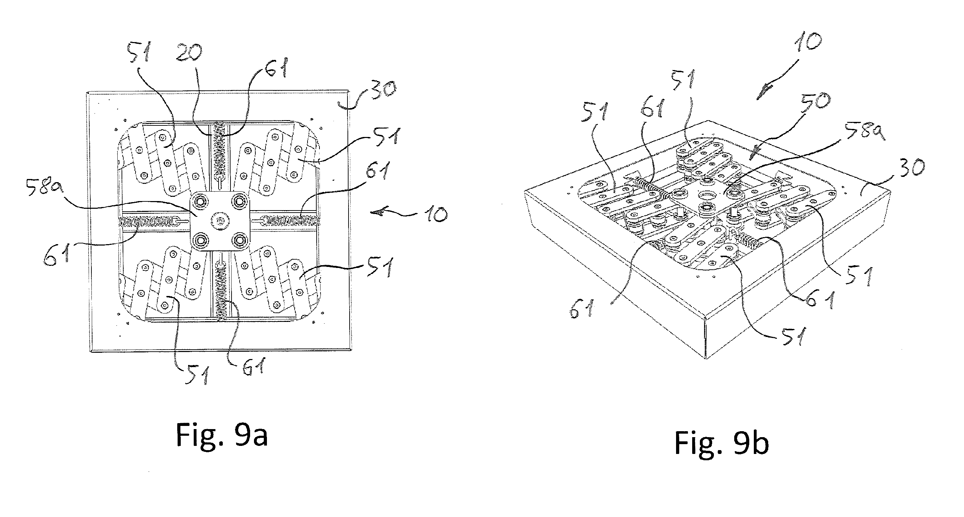

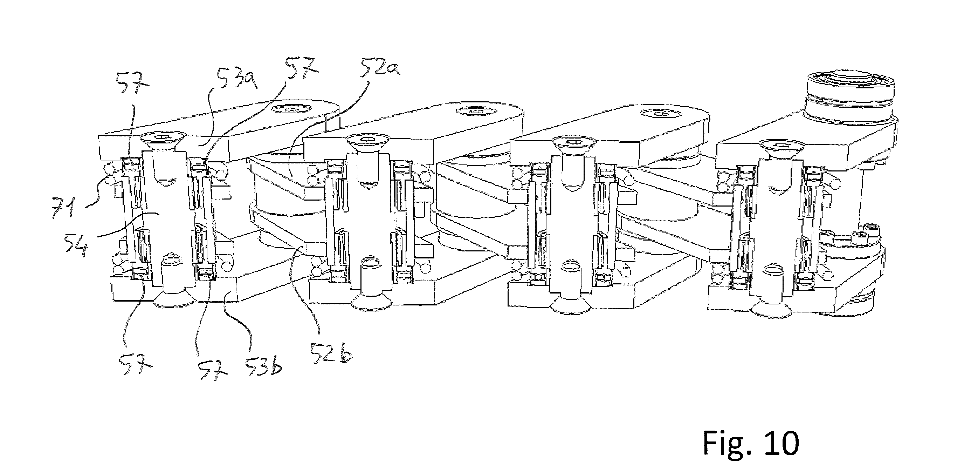

The mechanical system 50 can also comprise elastic return members, to bias the table towards its initial position. Such members are for example shown in figures 9 and 10, which are applied to the described support 10; the variants shown in these figures are otherwise completely identical to the support 10 and therefore shall not be described in the rest of the description except for as regards the elastic return members. Such elastic return members can comprise traction springs **61** (figs. 9a and 9b), which are mounted between the pair of flanges 58a, 58b (and therefore the supporting base 20) and the table 30. As an alternative or in addition (as shown in figs. 10a and 10b), the elastic return members can comprise torsion springs **71** that are applied to some of the pin elements 54 of the arm 51; alternatively, the springs 71 could be applied to the base pin elements 55 or to the table pin elements 56.

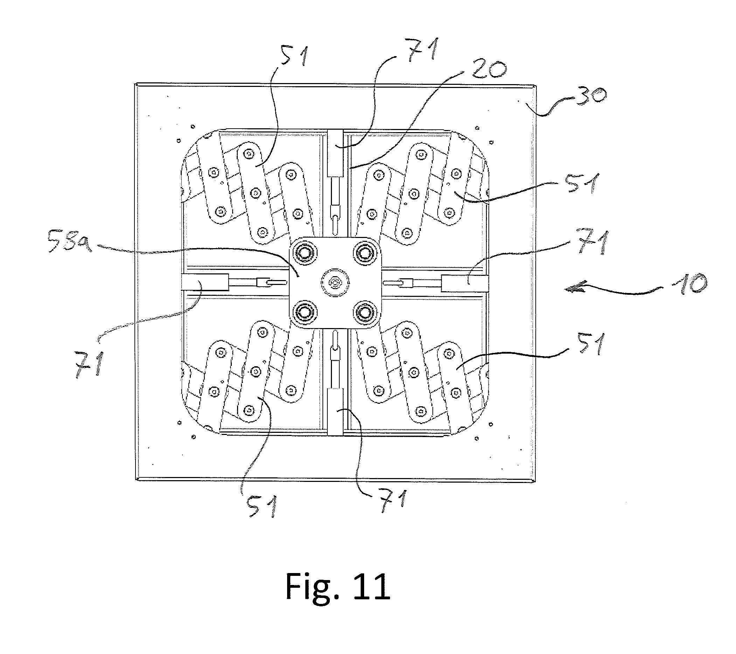

The mechanical system 60 can further comprise damping members, to brake the movement of the table away from its initial position. Such members are for example shown in figure 11, applied to the support 10 that has been described; the variants shown in these figures are otherwise completely identical to the support 10 and shall not therefore be described in the rest of the description except for as regards the damping members. Such damping members can comprise linear dampers **62,** which are mounted between the pair of flanges 58a, 58b (and therefore the supporting base 20) and the table 30.

The dampers 62 can advantageously be of the variable damping type, in which the braking action is linked not only to the speed of the movement but also to the extent of the movement.

In use, the support 10 can for example carry the display cabinet 40 (figs. 6-8). As can be easily understood, in the case in which there is an earthquake that shakes the ground, the supporting base 20, of course, follows the movements of the ground itself; the table 30 with the display cabinet 40 on top of it, on the other hand, will tend to remain still in the position it was in before the earthquake, with a consequent relative movement between the supporting base 20 and the table 30. This movement of course depends upon the earthquake; two possible situations are shown in figures 7 and 8, but of course there are an infinite amount of possible situations.

During the earthquake, the dampers 62 will tend to limit the extent of the movement of the table 30 with respect to the supporting base 20, thus preventing end stop positions from being reached, i.e. positions of maximum contraction or maximum length of one or more of the pantographic arms 51.

Once the earthquake has finished and a certain final position of the table 30 has been reached, the springs 61 will gradually tend to bring the table 30 back into its initial position, thus restoring the conditions that allow the support 10 to face a possible new earthquake.

It is also worth noting that the behaviour of the support 10 is independent from the direction or from the directions of the earthquake; the pantographic arms 51 do not indeed have any preferential deformation direction and are capable of being deformed in the same way in any direction.

## Claims

1. Seismic protection support, comprising a lower support base intended to be rested or fixed on the ground, an upper table intended to carry an object to be protected against an earthquake, a mechanical connection system between the supporting base and the table, **characterised in that** the mechanical system comprises at least one pantographic arm, with a succession of inner links and outer links connected together by pin elements, wherein each outer link comprises an upper rod and a lower rod that are parallel to one another, wherein the first link of the succession is hinged to the supporting base through a base pin element and wherein the last link of the succession is hinged to the table through a table pin element, so that the table is free to move with respect to the base between a predetermined initial position and a plurality of final positions.

2. Support according to claim 1, wherein the mechanical system comprises at least two pantographic arms.

3. Support according to claim 2, wherein the mechanical system comprises at least three pantographic arms.

4. Support according to claim 3, wherein the mechanical system comprises four pantographic arms.

5. Support according to any one of claims 1 to 4, wherein the pin elements of the pantographic arm, the base pin element and the table pin element are provided with combined rolling bearings, of the type suitable for sustaining axial loads.

6. Support according to any one of claims 1 to 5, wherein each inner link comprises an upper rod and a lower rod, parallel to one another.

7. Support according to any one of claims 2 to 6, wherein the mechanical system comprises a single pair of intermediate flanges fixed to the base or to the table, the base pin elements or the table pin elements, respectively, of each pantographic arm being carried by the pair of intermediate flanges.

8. Support according to any one of claims 1 to 7, wherein the mechanical system comprises at least one elastic return member, to bias the table towards its initial position.

9. Support according to claim 8, wherein the elastic return member comprises torsion springs applied to at least some of the pin elements of the arm and/or of the base and/or of the table.

10. Support according to claim 8, wherein the elastic return member comprises traction springs applied between the table and the supporting base.

11. Support according to any one of claims 1 to 10, wherein the mechanical system comprises at least one damping member, to brake the movement of the table away from its initial position.

12. Support according to claim 11, wherein the damping member comprises linear dampers applied between the table and the supporting base.

13. Support according to claim 11 or 12, wherein the damping member is of the variable damping type, in which the braking action is linked not only to the speed of movement but also to the extent of the movement.
